# EUROPÄISCHE PATENTSCHRIFT

(11) **EP 2 419 709 B1**
(45) Veröffentlichungstag und Bekanntmachung des Hinweises auf die Patenterteilung: **12.04.2017**
(21) Anmeldenummer: 10719227.0
(22) Anmeldetag: 16.04.2010
(51) Int. Cl.: G01N 21/15, G01N 21/35, B65H 23/02, D21F 7/04, D21F 7/00

(54) **VORRICHTUNG ZUR BESTIMMUNG DES WASSERGEHALTS EINES MESSOBJEKTS**
DEVICE FOR DETERMINING THE WATER CONTENT OF A TEST OBJECT
DISPOSITIF POUR DÉTERMINER LA TENEUR EN EAU D'UN OBJET SOUS TEST

(30) Priorität: 16.04.2009 AT 5852009; 12.03.2010 AT 4042010; 12.03.2010 AT 4112010
(43) Veröffentlichungstag der Anmeldung: 22.02.2012
(73) Patentinhaber: Üblacker, Dietmar, 3300 Winklarn (AT)
(72) Erfinder: Üblacker, Dietmar, 3300 Winklarn (AT)
(74) Vertreter: Ellmeyer, Wolfgang
(86) Internationale Anmeldenummer: PCT/AT2010/000113
(87) Internationale Veröffentlichungsnummer: WO 2010/118451

(56) Entgegenhaltungen:
- EP-A2- 0 516 913
- DE-A1- 3 149 869
- US-A- 3 910 701
- US-A1- 2003 184 746

## Beschreibung

Die Erfindung betrifft eine Vorrichtung zur Bestimmung des Wassergehalts eines Messobjekts mit zumindest einer Mess-Strahlungsquelle und zumindest einer Referenz-Strahlungsquelle, die auf die Messobjektoberfläche gerichtet sind, sowie zumindest einem Detektorelement zur Messung der Intensität der von der Messobjektoberfläche zurückreflektierten Strahlung, wobei bei Verwendung die zumindest eine Mess-Strahlungsquelle, die zumindest eine Referenz-Strahlungsquelle und das zumindest eine Detektorelement unmittelbar der Messobjektoberfläche gegenüberliegend angeordnet sind, wobei die Mess-Strahlungsquelle, die Referenz-Strahlungsquelle und das Detektorelement in einem Gehäuse angeordnet sind, für welche in einer Wand des Gehäuses entsprechende Durchbrechungen oder Durchlässe ausgebildet sind, durch welche die von der Mess-Strahlungsquelle und der Referenz-Strahlungsquelle ausgesandten Strahlen austreten und der von der Messobjektoberfläche reflektierte Strahl eintritt.

Die solcherart berührungslose Bestimmung des Wassergehalts kann für beliebige Messobjekte geschehen, besonders aber nicht ausschließlich, bei der Herstellung von Papier ist eine solche Wassergehaltsbestimmung erforderlich.

Insbesondere betrifft die Erfindung Vorrichtungen zur berührungslosen Bestimmung des Wassergehalts der bei der Papierherstellung verwendeten Stoffmischung aus Wasser und Faserstoffen, aus der durch kontinuierlichen Wasserentzug Papier gebildet wird.

Die Wassergehaltsbestimmung kann auch bei der Verwertung von Altfasern oder im Zusammenhang mit dem Vorgang des Schlammpressens aus Abwasserresten Anwendung finden, wobei der Wassergehalt einer auf Trockensiebe aufgebrachten Faserstoffbahn überwacht wird.

Gemäß der DE 31 49 869 A1 ist bereits eine Vorrichtung zur Messung der Feuchtigkeit einer Papierbahn bekanntgeworden, bei der zwei Lumineszenzdioden eine alternierende Pulsfolge von Infrarot-Lichtpulsen mit unterschiedlicher Wellenlänge aussenden und die Intensität der reflektierten Strahlung gemessen wird. Die Wellenlänge eines der beiden Lichtpulse entspricht der Absorptionslinie im IR-Absorptionsspektrum von Wasser, während die Wellenlänge des anderen Lichtpulses sich deutlich von jener der Absorptionswellenlänge unterscheidet und als Referenzsignal dient. Bei zueinander konstant gehaltenem Verhältnis der Intensitäten von Mess- und Referenzstrahl werden die reflektierten Strahlungsintensitäten beider Wellenlängen gemessen und daraus der Wassergehalt ermittelt. Ein relativ hoher konstruktiver und apparativer Aufwand ergibt sich durch die Strahlfokussierung und Strahlspiegelung, die für die Messung erforderlich ist. Während des Betriebs kommt es relativ rasch zu einer Verunreinigung der im Verlauf des Strahlengangs des Mess- und Referenzstrahls bzw. des reflektierten Strahls vorhandenen Vorrichtungsbestandteile.

In Bereichen von Papierherstellungsanlagen, in denen die Papierbahn einen sehr hohen Wasseranteil aufweist, erlauben die dort herrschenden Umgebungsbedingungen bisher keine funktionierende Messung, da hohe Temperaturen, in der Luft vorhandene Flüssigkeitströpfchen und sonstige Schwebeteilchen bei herkömmlichen Messvorrichtungen ein sofortiges Verlegen der Messoptik oder anderer Optikteile mit sich bringen und einen über einen längeren Zeitraum andauernden Betrieb verunmöglichen.

Die aus der EP 516 913 A2 bekannte Maßnahme zur Beaufschlagung eines Gehäuses mit Druckluft, sodass der aus Durchbrechungen der Gehäusewand austretende Luftstrom in der Umgebung von optischen Sender- und Empfängervorrichtungen die Verunreinigungen der Umgebung von den Öffnungen fernhält, hat den Nachteil, dass der aus den Löchern im Gehäuse austretende Luftstrom zwar einerseits Schwebeteilchen aus der Luft nach außen mitreißt, andererseits aber eine Sogwirkung entstehen lässt, der Teilchen im Bereich der Öffnungen ansammelt, sodass erst recht Ablagerungen auf der Gehäuseaußenseite entstehen können, die mit der Zeit zu einer Beeinträchtigung des optischen Strahlenganges der Sender- und Empfängervorrichtungen führt.

Bei anderen bekannten Vorrichtungen werden die Mess- und Referenzstrahlen bzw. die reflektierte Strahlung über Faseroptik-Bauteile von bzw. zu einer Messvorrichtung geleitet. Nachteilig ist auch hier der relative hohe apparative Aufwand, der eine erhöhte Ausfallwahrscheinlichkeit mit sich bringt und nur eine begrenzte Messempfindlichkeit ermöglicht.

Aufgabe der Erfindung ist es daher, eine Vorrichtung der eingangs genannten Art anzugeben, welche die Wassergehaltbestimmung mit einfachen technischen Mitteln und mit hoher Messgenauigkeit bei geringem Service- und Wartungsbedarf ermöglicht.

Weitere Aufgabe der Erfindung ist es, die berührungslose Wassergehaltsbestimmung auch bei hohen Wassergehalten des Messobjekts und in rauer Messumgebung ohne Beeinträchtigung der Messgenauigkeit und der Messsicherheit durchzuführen.

Erfindungsgemäß wird dies dadurch erzielt, dass eine Vorrichtung zur Druckbeaufschlagung mit Luft- oder Gas vorgesehen ist, mit der im Bereich des Strahlenganges jeweils zwischen der zumindest einen Mess-Strahlungsquelle und der Messobjektoberfläche, zwischen der zumindest einen Referenz-Strahlungsquelle und der Messobjektoberfläche sowie zwischen der Messobjektoberfläche und dem zumindest einen Detektorelement eine zwangsbewegte Luft- oder Gasatmosphäre erzeugbar ist,
dass die Durchlässe in der Wand des Gehäuses durch Durchgangsbohrungen in einem Halterungselement ausgebildet sind, an deren innerhalb des Gehäuses gelegenen Enden die Mess-Strahlungsquelle, die Referenz-Strahlungsquelle und das Detektorelement angeordnet sind, und dessen entgegengesetzte Enden bei Verwendung auf die Messobjektoberfläche gerichtet sind,
und dass die Durchgangsbohrungen des Halterungselements jeweils zumindest einen mit der Vorrichtung zur Druckbeaufschlagung verbundenen, seitlichen Einlass aufweisen, durch den zwangsbewegte Luft oder Gas in die Durchgangsbohrungen einbringbar ist.

Durch die zwangsbewegte Luft- oder Gasatmosphäre wird verhindert, dass sich Verunreinigungen, Feuchtigkeit, Keime od. dgl. auf den im Strahlengang befindlichen Strahlungsquellen und dem Detektorelement niederschlagen und diese mit der Zeit in ihrer Funktionsfähigkeit gestört sind. Durch Erzeugen eines lokal wirkenden Überdruckes wird verhindert, dass Verunreinigungen oder Niederschläge den für die Messung erforderlichen Strahlengang stören, indem sie Durchbrüche oder Durchlässe bzw. Eintritts- oder Austrittsöffnungen von Strahlungsquellen oder Detektoren verlegen oder mit einer Schicht überziehen.

Damit entfällt die sonst bereits nach kurzer Zeit erforderliche Reinigung der erfindungsgemäßen Vorrichtung und es können die Strahlungsquellen und das Detektorelement auch ohne Zwischenschaltung von optischen Hilfsmitteln wie Linsen, Spiegeln, optischen Fasern, Filtern oder Schutzgläsern betrieben werden. Dies ist sogar in sehr feuchten und/oder staubigen Umgebungen ohne Beeinträchtigungen des Messergebnisses möglich. Durch die zwangsbewegte Luft- oder Gasatmosphäre kann die erfindungsgemäße Vorrichtung auch unmittelbar in nächster Nähe zur zu bestimmenden Meßobjektoberfläche positioniert werden, ohne dass eine schnelle Verschmutzung der Vorrichtung befürchtet werden muss. In explosionsgefährdeten Umgebungen kann die erfindungsgemäße Vorrichtung ohne Zuhilfenahme von optischen Fasern durch Einsatz von geeigneten Inertgasen sogar unmittelbar in der Gefahrenzone eingesetzt werden. Die dadurch erzielte Vereinfachung im Aufbau der erfindungsgemäßen Vorrichtung hat eine hohe Ausfallsicherheit und eine hohe Messempfiindfichkeit und -genauigkeit zur Folge.

Die von der Mess-Strahlungsquelle und der Referenz-Strahlungsquelle ausgesandten Strahlen können somit durch die jeweiligen Durchgangsbohrungen austreten und der reflektierte Strahl durch die dafür vorgesehenen Durchgangsbohrungen wieder eintreten.

Weiters weisen die Durchgangsbohrungen des Halterungselements erfindungsgemäß jeweils zumindest einen seitlichen Einlass für die Druckbeaufschlagung mit Luft oder Gas auf. Damit verhindert ein während des Betriebs ständig strömender Spülmedienstrom das Eindringen von Verunreinigungen oder von Feuchtigkeit und schafft zugleich die Möglichkeit einer Kühlung oder Erwärmung der Mess- und Referenzstrahlungsquellen und des Detektorelements.

Eine einfache Realisierung der seitlichen Einlässe kann dadurch geschaffen werden, dass diese durch, vorzugsweise im rechten Winkel zur Mittelachse der Durchgangsbohrungen verlaufende, Sackbohrungen gebildet sind.

Es können dabei die Mittelachsen der Durchgangsbohrungen in einer Ebene fluchtend angeordnet sein.

Ein robuster Aufbau mit geringen Abmessungen der erfindungsgemäßen Vorrichtung lässt sich erzielen, wenn die zumindest eine Mess-Strahlungsquelle und die zumindest eine Referenz-Strahlungsquelle jeweils durch eine Lumineszenzdiode gebildet sind. Es ist auch möglich, z.B. mit Hilfe eines Filters die Mess-Strahlungsquelle und die Referenz-Strahlungsquelle durch eine einzige Strahlungsquelle zu ersetzen, allerdings sind dann wieder zusätzliche konstruktive Maßnahmen erforderlich, die der Zuverlässigkeit der erfindungsgemäßen Vorrichtung abträglich sein könnten.

Um die Anzahl der Messöffnungen zu minimieren kann in Weiterbildung der Erfindung die zumindest eine Mess-Strahlungsquelle und die zumindest eine Referenz-Strahlungsquelle in einem gemeinsamen LED-Gehäuse integriert sein. Zu diesem Zweck können handelsübliche Mehrfach-LED verwendet werden, in denen mehrere pn-Übergänge mit unterschiedlichen Emissions-Wellenlängen vorhanden sind. Bei Anwendung solcher Mehrfach-LED kann auch eine Erhöhung der Strahlungsintensität erreicht werden.

Da die Mess-Strahlungsquelle und die Referenz-Strahlungsquelle der Messobjektoberfläche direkt gegenüberliegend angeordnet sind, gelangt die von der Messobjektoberfläche reflektierte Strahlung ohne besondere Hilfsmittel in das Detektorelement. In besonders bevorzugter Weise sind die von der Mess-Strahlungsquelle und der Referenz-Strahlungsquelle ausgesandten Strahlen unkollimiert, wodurch bei der Orientierung der Mess-Strahlungsquelle und der Referenz-Strahlungsquelle sowie des Detektorelements kleinere Abweichungen von der idealen Ausrichtung keine nennenswerten Auswirkungen auf das Messergebnis haben.

Eine weitere Ausführungsform der Erfindung kann darin bestehen, dass das Messobjekt ein sich bewegendes Bahngut ist, das gegenüber der Mess-Strahlungsquelle, der Referenz-Strahlungsquelle und dem Detektorelement in einem konstanten Abstand geführt ist. Dies trifft insbesondere auf die Messbedingungen bei der Papierherstellung zu, bei welcher die wasserhaltige Messobjektobertläche mit hoher Geschwindigkeit an der erfindungsgemäßen Vorrichtung vorbeibewegt wird und die Messung des Wassergehalts während der Bewegung des Messobjekts erfolgt.

Sowohl aus Gründen der Messsicherheit als auch aus Gründen der einfacheren Herstellung hat es sich als vorteilhaft erwiesen, die Mess- und Referenzstrahlungsquellen sowie das Detektorelement im Gehäuse sehr nahe bei einander zu platzieren, wodurch die zurückgelegten Wege der ausgesandten und reflektierten Strahlen kurz und Störungen klein gehalten werden können.

Es können aber auch nur zwei Durchbrechungen oder Durchlässe ausgebildet sein, wobei die zumindest eine Mess-Strahlungsquelle und die zumindest eine Referenz-Strahlungsquelle in einem gemeinsamen LED-Gehäuse integriert sind, für welches nur eine der Durchbrechungen oder Durchlässe vorgesehen ist.

Eine mögliche Variante der Erfindung kann darin bestehen, dass die Mittelachsen der Durchgangsbohrungen parallel ausgerichtet sind. Da die Mess-Strahlungsquelle und die Referenz-Strahlungsquelle in unmittelbarer Nähe des Detektorelements angeordnet sind, gelangt trotz der parallelen Strahlausrichtung noch immer ausreichende Intensität reflektierter Strahlung in das Detektorelement.

Um die Intensität der auf dem Detektorelement eintreffenden, reflektierten Strahlung der Mess- und der Referenz-Strahlungsquelle zu erhöhen, kann es gemäß einer anderen Ausführungsvariante der Erfindung vorteilhaft sein, wenn die optischen Achsen der Mess-Strahlungsquelle und der Referenz-Strahlungsquelle so geneigt sind, dass die auf die Messobjektoberfläche gerichteten Strahlen auf die Stelle der Messobjektoberfläche auftreffen, die entlang einer Oberflächennormalen genau dem Detektorelement gegenüberliegt.

Dabei kann die Mittelachse der Durchgangsbohrung für das Detektorelement normal zur Messobjektoberfläche orientiert sein und die Mittelachsen der Durchgangsbohrungen für die Mess-Strahlungsquelle und die Referenz-Strahlungsquelle können einen Winkel mit der Mittelachse der Durchgangsbohrung für das Detektorelement einschließen.

Als vorteilhaft hat es sich herausgestellt, wenn die Durchbrechungen oder Durchlässe, durch die hindurch die Strahlung aus dem Gehäuse austritt bzw. in dieses wieder eintritt, so gestaltet sind, dass die Druckbeaufschlagung mit Luft oder Gas gegen von außen eindringende Verunreinigungen unmittelbar im Bereich der Durchbrechungen oder Durchlässe erfolgt.

In weiterer Ausbildung der Erfindung kann das Gehäuse gasdicht ausgebildet sein und einen druckdichten Einlass zum Anschluss an eine Druckluft- oder Druckgasleitung aufweisen. Der auf diese Weise durch Druckbeaufschlagung im Inneren des Gehäuses entstehende Überdruck verhindert einerseits ein Eindringen von Verunreinigungen in das Gehäuse und zusätzlich erzeugt er eine Luft- oder Gasströmung aus dem Inneren des Gehäuses durch die Durchlässe oder Durchbrechungen hindurch, welche für das Austreten der Mess- und Referenzstrahlung sowie für das Eintreten der von der Messobjektoberfläche reflektierten Strahlung vorgesehen sind, wodurch eine ständige Reinigung der Mess- und Referenzstrahlungsquellen und des Detektorelements erfolgt, sofern reine Luft oder ein reines Gas angewandt wird.

Eine weitere Variante der Erfindung kann darin bestehen, dass die zumindest eine Mess-Strahlungsquelle und die zumindest eine Referenz-Strahlungsquelle auf einem gedachten Kreis um das zumindest eine Detektorelement angeordnet sind, wodurch eine günstige Anordnung mehrerer Strahlungsquellen erzielbar ist, wobei die Messung mit der Intensität mehrerer Strahlungsquellen durchgeführt werden kann.

Die Druckbeaufschlagung muss nicht innerhalb des Gehäuses erfolgen, in dem die Strahlungsquellen untergebracht sind sondern kann durchaus auch außerhalb desselben geschehen. Eine weitere Ausführungsform der Erfindung sieht daher vor, das an der Außenseite des Gehäuses im Bereich der Durchbrechungen oder Durchlässe eine diese überdeckende Abdeckschale vorgesehen ist, die druckdicht mit der Außenseite des Gehäuses verbunden ist, die zusammen mit der Gehäuse-Außenwand einen Hohlraum ausbildet und die Öffnungen aufweist, die fluchtend mit den Durchbrechungen oder Durchlässen verlaufen, wobei die Abdeckschale einen druckdichten Einlass zum Anschluss an die Vorrichtung zur Druckbeaufschlagung mit Luft oder Gas aufweist. Die Abdeckschale überdeckt die in den Durchbrechungen oder Durchlässen der Gehäusewand angeordnete Mess-Strahlungsquelle, Referenz-Strahlungsquelle und Detektorelement und stellt zugleich die Öffnungen für das in beiden Richtungen hindurch tretende Licht bereit. Im Betrieb wird die unter Druck stehende Luft oder das Gas durch die Abdeckschale und die Öffnungen in der Abdeckschale hindurch nach außen gedrückt und erzeugt dabei die für das Freihalten des Strahlenganges der Mess- und Referenz-Strahlungsquelle sowie des Detektorelements erforderliche zwangsbewegte Luft- oder Gasatmosphäre.

Die Strahlungsquellen und das Detektorelement können durch ein zwischengeschaltetes, strahlungsdurchlässiges Element vor Verunreinigungen geschützt sein.

Dies kann gemäß einem weiteren Ausführungsbeispiel der Erfindung dadurch verwirklicht sein, dass im Strahlengang der zumindest einen Mess-Strahlungsquelle und/oder der zumindest einen Referenz-Strahlungsquelle und/oder des zumindest einen Detektorelements jeweils eine strahlungsdurchlässige Schutzplatte angeordnet ist.

Um Fremdlichteinwirkungen zu verringern kann die strahlungsdurchlässige Schutzplatte eine Filterplatte sein, die nur in einem festgelegten Spektralbereich strahlungsdurchlässig ist.

Eine Luft- oder Gasspülung kann dabei die Schutzplatte vor Ablagerungen durch in der Umgebungsatmosphäre vorhandenen Partikeln oder Tröpfchen bewahren, indem ein oder mehrere mit der Vorrichtung zur Druckbeaufschlagung verbundene Gas- oder Lufteinlässe vorgesehen sind, die jeweils an der der zumindest einen Mess-Strahlungsquelle, der zumindest einen Referenz-Strahlungsquelle und des Detektorelements gegenüberliegenden Seite der Schutzplatte angeordnet sind.

Gemäß einer weiteren Ausbildung der Erfindung kann zumindest eine Wandöffnung in einer Gehäusewand vorgesehen sein, die mit einem nach außen vorstehenden Rohrstück in Verbindung steht, in welchem die zumindest eine Mess-Strahlungsquelle und/oder die zumindest eine Referenzstrahlungsquelle und/oder das zumindest eine Detektorelement angeordnet ist oder sind, und dass die zumindest eine Wandöffnung mit der Vorrichtung zur Druckbeaufschlagung mit Luft- oder Gas in Verbindung steht, sodass Luft oder Gas durch die zumindest eine Wandöffnung und das Rohrstück hindurch nach außen strömt und dabei die zumindest eine Mess-Strahlungsquelle und/oder die zumindest eine Referenzstrahlungsquelle und/oder das zumindest eine Detektorelement umspült.

Auf diese Weise wird die Luft- oder Gasströmung aus dem Gehäuse nach außen geführt und umströmt dabei die im Rohrstück angeordnete Strahlungsquelle oder den darin angeordneten Detektor.

Es können die Strahlungsquellen und der Detektor auch so angeordnet sein, dass die Spülströmung nicht über die ganze Länge eines rohrförmigen Querschnitts geführt wird, sondern seitlich in ein Rohrstück einmünden gelassen wird.

Eine weitere Ausführungsform der Erfindung kann daher darin bestehen, dass die zumindest eine Mess-Strahlungsquelle und/oder die zumindest eine Referenzstrahlungsquelle und/oder das zumindest eine Detektorelement in einem röhrenförmigen Durchlass in einem Abstand zu einer nach außen führenden Öffnung des Durchlasses angeordnet sind, und dass der röhrenförmige Durchlass mit der Vorrichtung zur Druckbeaufschlagung mit Luft- oder Gas in Verbindung steht, sodass Luft oder Gas im Bereich des Strahlenganges der zumindest einen Mess-Strahlungsquelle und/oder der zumindest einen Referenzstrahlungsquelle und/oder des zumindest einen Detektorelements strömt.

Um zumindest einen Teil der in der Luft vorhandenen Schwebeteilchen am direkten Auftreffen an der erfindungsgemäßen Vorrichtung zu hindern, kann gemäß einer weiteren Ausführungsform der Erfindung eine Prallplatte vorgesehen sein, welche den Bereich der Strahlungsquellen und des Detektors so abdeckt, dass aus einer bestimmten Richtung kommende Teilchen am Aufprallen im Bereich des Strahlengangs gehindert werden, wodurch ein Absinken der Strahlintensität aufgrund von Teilchen-Ablagerungen an der erfindungsgemäßen Vorrichtung vermieden wird.

Eine besonders gute Wirkung lässt sich erzielen, wenn die Ebene der Prallplatte im wesentlichen parallel zum Strahlengang der zumindest einen Mess-Strahlungsquelle und/oder der zumindest einen Referenzstrahlungsquelle und/oder des zumindest einen Detektorelements verläuft.

Weiters kann vorgesehen sein, dass die zumindest eine Mess-Strahlungsquelle und die zumindest eine Referenzstrahlungsquelle und das zumindest eine Detektorelement in einem Gehäuse angeordnet sind, das mit einer Seite an der Prallplatte angebracht ist. Auf diese Weise kann die Ausrichtung des Gehäuses durch die Anbringung an der Prallplatte geschehen, welche zugleich Schutz gegen einen Teil der sich in Richtung der erfindungsgemäßen Vorrichtung bewegenden Partikel bietet.

Eine weitere Aufgabe der Erfindung stellt die Detektion eines Papierbahnrisses während der Produktion dar, um Standzeiten und Beschädigungen an der Anlage zu verhindern. Bei den auftretenden hohen Fördergeschwindigkeiten und unterschiedlichen Papierqualitäten und -beschaffenheiten stellt dies ein nichttriviales Problem dar.

Weiters betrifft die Erfindung daher die Verwendung einer erfindungsgemäßen Vorrichtung zur Papierabrissdetektion bei der Papierherstellung. Der Wegfall einer bestimmten Intensität des reflektierten Strahlungssignals kann dabei als Ein- oder Abriss der durchlaufenden Papierbahn gemeldet werden.

Nachfolgend wird die Erfindung anhand der in den Zeichnungen dargestellten Ausführungsbeispiele eingehend erläutert. Es zeigt dabei
Fig.1 eine Seitenansicht einer Ausführungsform der erfindungsgemäßen Vorrichtung;
Fig.2 einen Schnitt AA durch die Ausführungsform gemäß Fig.1;
Fig.3 einen Schnitt durch eine weitere Ausführungsform der erfindungsgemäßen Vorrichtung;
Fig.4 einen Schnitt AA durch ein Halterungselement der in Fig.3 gezeigten Vorrichtung;
Fig.5 eine Vorderansicht des in Fig.4 gezeigten Halterungselements;
Fig.6 einen Schnitt BB durch das in Fig.4 gezeigte Halterungselement;
Fig.7 eine schematische teilweise Seitenansicht einer weiteren Ausführungsform der erfindungsgemäßen Vorrichtung;
Fig.8 einen teilweisen Schnitt BB durch die Vorrichtung gemäß Fig.9;
Fig.9 eine teilweise Seitenansicht einer weiteren Ausführungsform der erfindungsgemäßen Vorrichtung;
Fig.10 ein teilweiser Schnitt CC durch die Vorrichtung gemäß Fig. 9.
Fig.11 eine Seitenansicht einer weiteren Ausführungsform der erfindungsgemäßen Vorrichtung;
Fig.12 einen Schnitt AA durch die Ausführungsform gemäß Fig.11;
Fig.13 einen Schnitt BB durch ein Detail der Ausführungsform gemäß Fig.11;
Fig.14 ein Detail der Fig.12;
Fig.15 einen Schnitt durch ein Detail einer weiteren Ausführungsform der erfindungsgemäßen Vorrichtung;
Fig.16 einen Schnitt durch ein Detail einer weiteren Ausführungsform der erfindungsgemäßen Vorrichtung und
Fig.17 einen Schrägriss einer Befestigungsanordnung einer Ausführungsform der Erfindung.

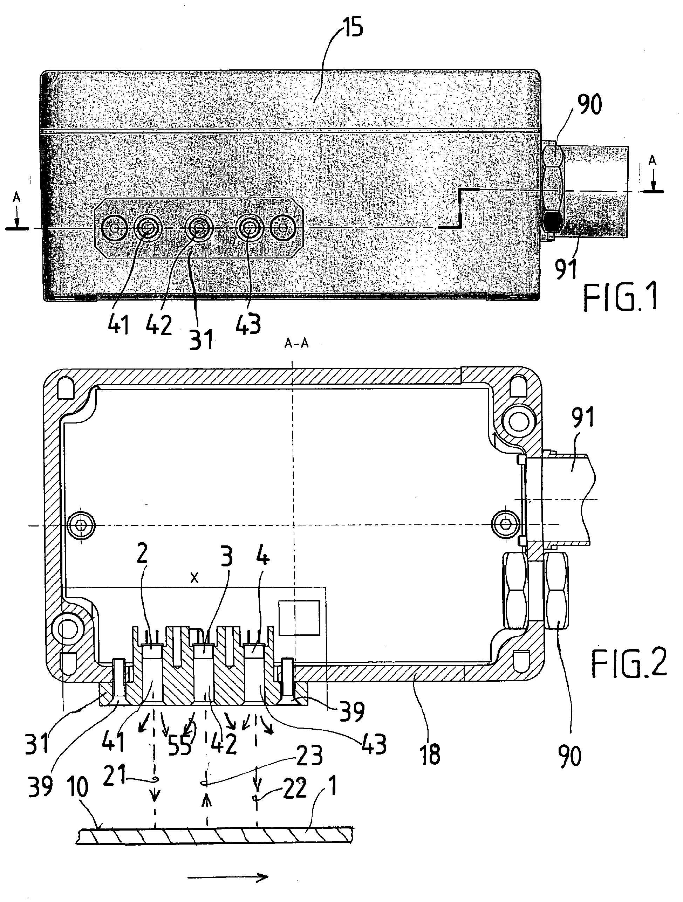

Fig.1 und Fig.2 zeigen eine Vorrichtung zur Bestimmung des Wassergehalts eines Messobjekts 1, die in einem zweiteiligen kastenförmigen Gehäuse 15 aufgenommen ist. Die Signal- und Steuerungseinrichtungen sind dabei der Einfachheit halber nicht dargestellt. Über einen Kabelanschluss 90 erfolgen die elektrische Energieversorgung und die Signal- und/oder Datenübertragung zu einer nicht dargestellten zentralen Einheit.

In einer Durchbrechung einer Wand 18 der unteren Hälfte des Gehäuses 15 ist ein Halterungselement 31 gas- und druckdicht eingelassen, das mit Schrauben 39 fixiert ist. Im Halterungselement 31 sind eine Mess-Strahlungsquelle 2 und eine Referenz-Strahlungsquelle 4 so gehalten, dass sie auf eine Messobjektoberfläche 10 des Messobjekts 1 gerichtet sind. Weiters ist vom Halterungselement 31 ein Detektorelement 3 zur Messung der Intensität der von der Messobjektoberfläche zurückreflektierten Strahlung gehalten.

Erfindungsgemäß sind die Mess-Strahlungsquelle 2, die Referenz-Strahlungsquelle 4 und das Detektorelement 3 während des Messvorgangs unmittelbar der Messobjektoberfläche 10 gegenüberliegend angeordnet. Weiters ist eine nicht dargestellte Vorrichtung zur Druckbeaufschlagung mit Luft oder Gas vorgesehen, die im Bereich des Strahlenganges jeweils zwischen der Austrittsfläche der Mess-Strahlungsquelle 2 und der Messobjektoberfläche 10, zwischen der Referenz-Strahlungsquelle 4 und der Messobjektoberfläche 10 sowie zwischen der Messobjektoberfläche 10 und der Eintrittsfläche des Detektorelements 3 eine zwangsbewegte Luft- oder Gasatmosphäre (Pfeile 55) erzeugt, die das Verlegen oder Beeinträchtigen der Mess-Strahlungsquelle 2, der Referenz-Strahlungsquelle 4 und des Detektorelements 3 durch Verunreinigungen, Feuchtigkeit od. dgl. verhindert.

Vorzugsweise sind die Mess-Strahlungsquelle 2 und die Referenz-Strahlungsquelle 4 jeweils durch eine Lumineszenzdiode gebildet und die von der Mess-Strahlungsquelle 2 und der Referenz-Strahlungsquelle 4 ausgesandten Strahlen sind unkollimiert. Die von der Mess-Strahlungsquelle 2 und der Referenz-Strahlungsquelle 4 ausgestrahlten Wellenlängen liegen in einem Bereich von ca. 1000 nm bis 2000 nm. Vorzugsweise liegt die Wellenlänge der Mess-Strahlungsquelle 2 bei 1450 nm oder 1940 nm, bei der die Strahlung von Wasser gut absorbiert wird, und die Wellenlänge der Referenz-Strahlungsquelle 4 bei einem von der IR-Absorptionslinie von Wasser deutlichen unterschiedlichen Wert von z.B. 1300 nm. Das Detektionselement 3 misst die Intensität der von der Messobjektoberfläche 10 reflektierten elektromagnetischen Strahlung. Aus dem Verhältnis der Intensitäten bei der Referenzwellenlänge und bei der Messwellenlänge wird unter Zugrundlegung von Kalibrierdurchläufen der Wassergehalt des zu bestimmenden Messobjekts berechnet. Die Mess-Strahlungsquelle 2 und die Referenz-Strahlungsquelle 4 können ihre Strahlung kontinuierlich abgeben oder in Form von Pulsen, die entsprechend verarbeitet werden können. Strahlungspulse haben den Vorteil der geringeren Störbeeinflussung durch andere Strahlungsquellen.

Das Detektionselement 3 ist eine Fotodiode oder ein Fototransistor, kann aber auch durch ein anderes gleichwertiges Element gebildet sein.

Das Messobjekt 1 ist in dem in Fig.2 gezeigten Ausführungsbeispiel ein Bahngut, z.B. eine Papierbahn, die gegenüber der Mess-Strahlungsquelle 2, der Referenz-Strahlungsquelle 4 und dem Detektorelement 3 in einem konstanten Abstand vorbeibewegt wird.

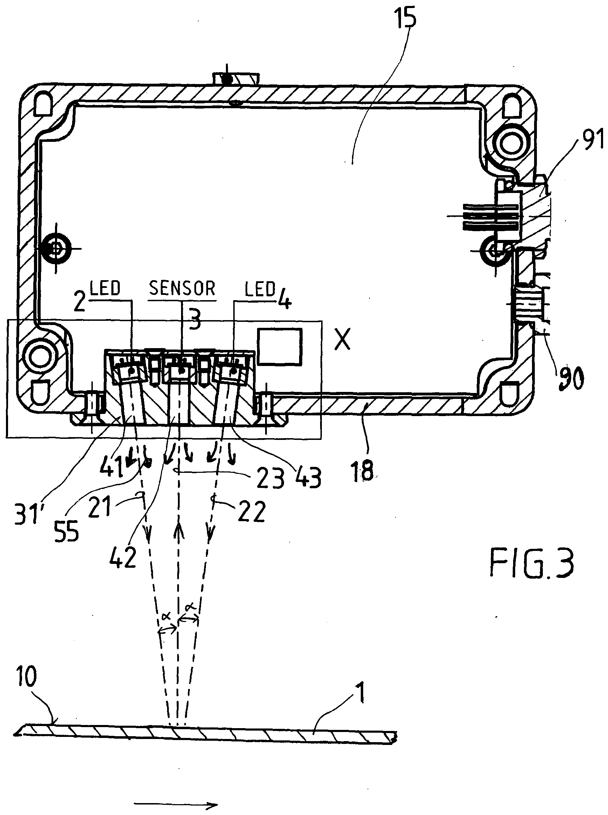

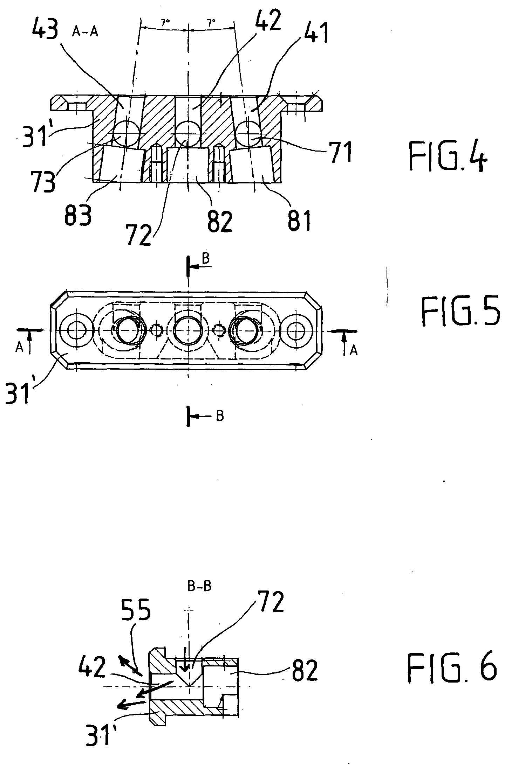

Im Halterungselement 31 sind parallele, durch die Wand 18 hindurchführende Durchgangsbohrungen 41, 42 und 43 ausgenommen, an deren innerhalb des Gehäuses 15 gelegenen Enden die Mess-Strahlungsquelle 2, das Detektorelement 3 und die Referenz-Strahlungsquelle 4 mit ihren optischen Achsen entlang der Mittelachsen 21, 22 und 23 verlaufend eingesetzt sind, und deren entgegengesetzte Enden bei Verwendung auf die Messobjektoberfläche 10 gerichtet sind. Zur geeigneten Aufnahme der Mess-Strahlungsquelle 2, des Detektorelements 3 und der Referenz-Strahlungsquelle 4 sind entsprechende Aufnahmebohrungen 81, 82, 83 am inneren Ende der Durchgangsbohrungen 41, 42 und 43 vorgesehen, wie sie für das Ausführungsbeispiel gemäß Fig.3 in Fig.4 im Detail gezeigt sind.

Wie aus Fig.2 ersichtlich sind dadurch die von der Mess-Strahlungsquelle 2 und der Referenz-Strahlungsquelle 4 entlang der Mittelachsen 21, 22 ausgesandten Strahlen, die durch die Durchgangsbohrungen 41, 43 austreten sowohl zueinander als auch zu dem von der Messobjektoberfläche 10 entlang der Mittelachse 23 reflektierten Strahl, der durch die Durchgangsbohrung 42 eintritt und vom Detektorelement 3 empfangen wird, parallel.

Weiters sind gemäß Fig.1 die Mittelachsen 21, 23, 22 der Durchgangsbohrungen 41, 42, 43 in einer Ebene fluchtend angeordnet. Die Art der Anordnung und die Anzahl der verwendeten Mess-Strahlungsquellen, Referenz-Strahlungsquellen und der Detektorelemente sind im Rahmen der Erfindung jedoch keineswegs eingeschränkt.

Die Länge der Durchgangsbohrungen 41, 42, 43 beträgt vorzugsweise ungefähr das Dreifache des Innendurchmessers, wodurch sich ein guter Schutz gegen Streulichtquellen erzielen lässt.

Die Halterung der Mess- und Referenz-Strahlungsquelle 2, 4 und des Detektorelements 3 können auch auf andere Weise erfolgen, so könnte etwa nur ein einziger Durchlass für alle drei Elemente vorgesehen sein.

Im Ausführungsbeispiel gemäß den Figuren 3 bis 6 sind die Mess-Strahlungsquelle 2, die Referenz-Strahlungsquelle 4 und das Detektorelement 3 so orientiert, dass die auf die Messobjektoberfläche 10 entlang der Mittelachsen 21, 22 auftreffenden Strahlen sich ungefähr in einem Punkt treffen, der genau im Verlauf einer Normalen zum Detektorelement 3 liegt und somit an jener Stelle, von wo aus der senkrecht von der Messobjektoberfläche 10 entlang der Mittelachse 23 zurückreflektierte Strahl in das Detektorelement 3 eintritt.

Um dies zu erreichen ist die Mittelachse der Durchgangsbohrung 42 für das Detektorelement 3 normal zur Messobjektoberfläche 10 orientiert und die Mittelachsen 21, 22 der Durchgangsbohrungen 41, 43 für die Mess-Strahlungsquelle 2 und die Referenz-Strahlungsquelle 4 schließen einen Winkel α von 7° mit der Mittelachse 23 der Durchgangsbohrung 42 für das Detektorelement 3 ein.

Wie in Fig.4 und Fig.6 gezeigt weisen die Durchgangsbohrungen 41, 42, 43 des Halterungselements 31' jeweils zumindest einen seitlichen Einlass 71, 72, 73 für die Druckbeaufschlagung mit Luft oder Gas auf, die durch, vorzugsweise im rechten Winkel zur Mittelachse der Durchgangsbohrungen 41, 42, 43 verlaufende, Sackbohrungen gebildet sind. Diese seitlichen Einlässe sind im Ausführungsbeispiel gemäß Fig.1 und 2 nicht detailliert gezeigt dort aber auch vorhanden.

Die Druckbeaufschlagung mit Luft oder Gas erfolgt, indem das Gehäuse 15 gasdicht ausgebildet ist und einen druckdichten Einlass 91 zum Anschluss an eine Druckluft- oder Druckgasleitung aufweist, welche die Vorrichtung zur Druckbeaufschlagung darstellt. Bei Einspeisen von Druckluft entsteht im Inneren des Gehäuses 15 gegenüber der Umgebung ein Überdruck, der ein Entweichen der Luft oder des Gases aus dem Inneren des Gehäuses 15 über die für den Durchtritt der Strahlen und für die Ausbildung des Strahlengangs erforderlichen Öffnungen, und zwar über die seitlichen Einlässe 71, 72, 73 und die drei Durchgangsbohrungen 41, 42, 43 in die Umgebung zur Folge hat. Die Luft oder das Gas, die bzw. das auf diese Weise nach außen gelangt weist vorzugsweise eine hohe Reinheit auf, wodurch die Durchgangsbohrungen 41, 42, 43 aufgrund des ständigen Spülstroms von Verunreinigungen oder Feuchtigkeit freigehalten werden können. Über die Temperaturregelung der einströmenden Luft bzw. eines solchen Gases kann Kühlung oder Erwärmung erzielt werden, wenn Abwärme abgeführt oder

Kondensation bzw. Keimbildung vermieden werden soll.

In explosionsgefährdeten Umgebungen kann als Spülgas ein Inertgas, wie z.B. Stickstoff oder Kohlendioxid verwendet werden.

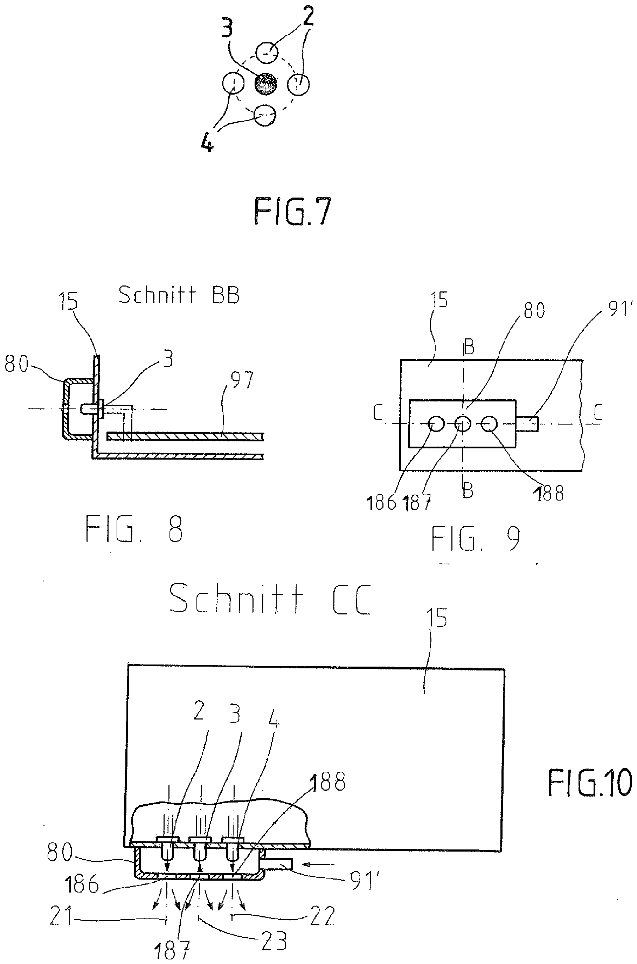

Fig.7 zeigt ein weiteres Ausführungsbeispiel, bei dem anstelle einer linearen Anordnung zwei Mess-Strahlungsquellen 2 und zwei Referenz-Strahlungsquellen 4 auf einem gedachten Kreis um das Detektorelement 3 angeordnet sind. Diese Anordnung kann hinsichtlich der Anzahl und der Reihenfolge der Mess-Strahlungsquellen 2 und der Referenz-Strahlungsquellen 4 beliebig variiert werden und ermöglicht eine Erhöhung der auf das Messobjekt 1 einwirkenden Strahlung.

Um die Anzahl der Durchbrechungen oder Durchlässe im Gehäuse 15 zu minimieren können die Mess-Strahlungsquelle 2 und die Referenz-Strahlungsquelle 4 in einem gemeinsamen LED-Gehäuse integriert sein. Sehr vorteilhaft haben sich dabei Zweifach- oder Dreifach-LED erwiesen, die ein LED-Gehäuse mit einer entsprechenden Anzahl von pn-Übergängen mit unterschiedlichen Wellenlängen aufweisen. Eine Dreifach-LED kann z.B. LED mit den Wellenlängen 1300 nm, 1450 nm und 1500 nm in einem gemeinsamen LED-Gehäuse beinhalten. Es ist daher z.B. möglich, mit nur zwei Durchbrechungen im Gehäuse 15 für die Mess-Strahlungsquelle 2, die Referenz-Strahlungsquelle 4 und das Detektorelement 3 die erfindungsgemäße Vorrichtung zu realisieren. Bei nur zwei Durchbrechungen wird auch eine geringe Luft- oder Gasmenge im Zusammenhang mit der Druckbeaufschlagung benötigt. Mit den Mehrfach-LED ist eine Erhöhung der abgestrahlten Intensität bei gleich bleibender Anzahl von Durchbrechungen möglich, weil z.B. bei drei Durchbrechungen zwei davon mit Mehrfach-LED und eine mit einem Detektorelement bestückt sein können, sodass die beiden Mehrfach-LED einerseits jeweils gleichzeitig die Messstrahlung und andererseits jeweils gleichzeitig die Referenzstrahlung aussenden können, wodurch sich eine Verdopplung der ausgesandten intensität gegenüber der Anordnung mit Einfach-LED erzielen lässt.

Im Ausführungsbeispiel gemäß Fig. 8, 9 und 10 ist an der Außenseite des Gehäuses 15 im Bereich der Durchbrechungen für die Mess- und Referenz-Strahlungsquelle 2, 4 sowie dem Detektorelement 3 eine diese überdeckende Abdeckschale 80 vorgesehen, die gas- und druckdicht mit der Außenseite des Gehäuses 15 verbunden ist.

Die Abdeckschale 80 bildet dabei zusammen mit der Gehäuse-Außenwand einen Hohlraum aus und weist Öffnungen 186, 187, 188 auf, die fluchtend mit den Durchbrechungen verlaufen, in welche die Mess-Strahlungsquelle 2, die Referenz-Strahlungsquelle 4 und das Detektorelement 3 so eingesetzt sind, dass deren Mittelachsen 21, 22 und 23 bzw. optische Achsen fluchtend mit den Öffnungen 186, 187, 188 ausgerichtet sind und die austretende bzw. zurückreflektierte Strahlung durch diese Öffnungen 186, 187, 188 in der Abdeckschale 80 hindurchtreten können. Die Öffnungen 186, 187, 188 sind in der gezeigten Ausführungsform im Querschnitt kreisförmig, können aber jede andere Form aufweisen, sie können z.B. auch durch einen einzigen Schlitz entsprechender Größe ersetzt werden.

Die Mess-Strahlungsquelle 2, die Referenz-Strahlungsquelle 4 sind als LED und das Detektorelement 3 als Photodiode vorgesehen, die anschlussseitig auf einer Leiterplatte 97 im Inneren des Gehäuses angeordnet sind.

Seitlich weist die Abdeckschale 80 einen druckdichten Einlass 91' zum Anschluss an die Vorrichtung zur Druckbeaufschlagung mit Luft oder Gas auf. Im Betrieb hält die aufgrund des in der Abdeckschale 80 erzeugten Überdrucks aus den Öffnungen 186, 187 und 188 austretende Luft bzw. Gas die Mess- und Referenz-Strahlungsquellen 2, 4 sowie das Detektorelement 3 frei von Ablagerungen oder Verschmutzungen.

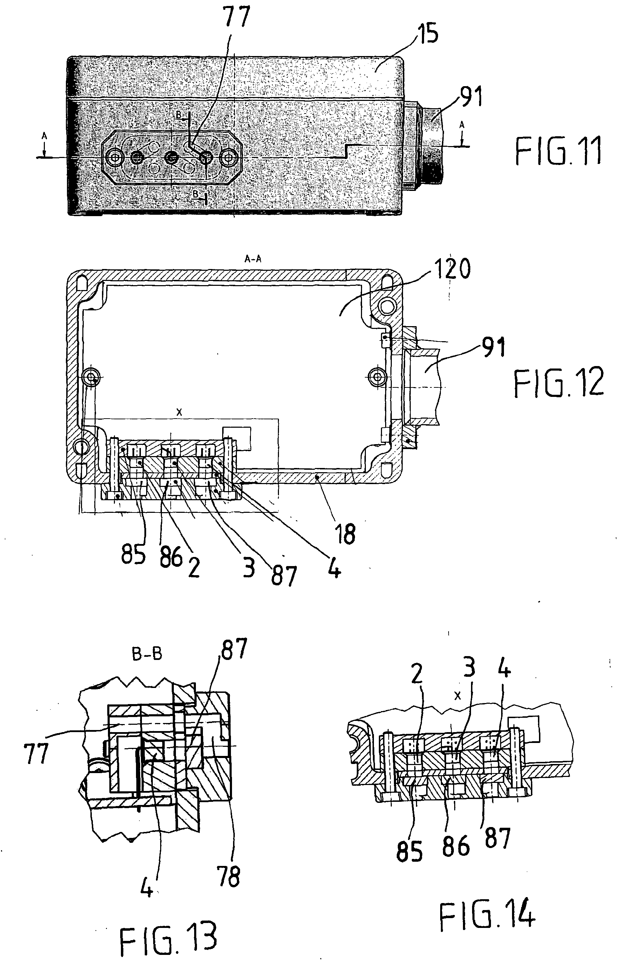

Fig. 11, 12, 13 und 14 zeigen ein Ausführungsbeispiel bei dem im Strahlengang der Mess-Strahlungsquelle 2 und der Referenz-Strahlungsquelle 4 und des Detektorelements 3 jeweils eine strahlungsdurchlässige Schutzplatte 85, 86, 87 z.B. aus Quarzglas angeordnet ist, um einen Schutz gegen mechanische Einwirkungen von außen zu erzielen zugleich aber ungehindertes Hindurchlassen der ausgesandten Mess- und Referenzstrahlung sowie der zurückreflektierten Strahlung, die in das Detektorelement eintritt, zu gewährleisten. In Fig. 12 ist eine Platine 120 für nicht dargestellte Steuereinheiten gezeigt.

Die strahlungsdurchlässigen Schutzplatten 85, 86, 87 können aber auch als Filterplatten ausgeführt sein, die nur in einem festgelegten Spektralbereich strahlungsdurchlässig sind, um Fremdlichtwirkung herabzusetzen.

Fig.13 zeigt im Detail einen Gas- oder Luftkanal 77, der an seinem einen Ende mit der Vorrichtung zur Druckbeaufschlagung in Verbindung steht und an seinem anderen Ende einen Gas- oder Lufteinlass 78 ausbildet, der an der der Referenz-Strahlungsquelle 4 gegenüberliegenden Seite der Schutzplatte 87 angeordnet ist und seitlich in die nach außen führende Durchgangsbohrung mündet, die an ihrem gehäuseinnenseitigen Ende die Strahlungsquelle 4 aufnimmt. In gleicher Weise sind weitere, nicht dargestellte Gas- oder Lufteinlässe für die Messtrahlungsquelle 2 und das Detektorelement 3 vorgesehen. Die Spülung mit Gas oder Luft geschieht somit auf der von den Strahlungsquellen 2, 4 bzw. dem Detektor 3 abgewandten Seite der Schutzplatten 85, 86, 87.

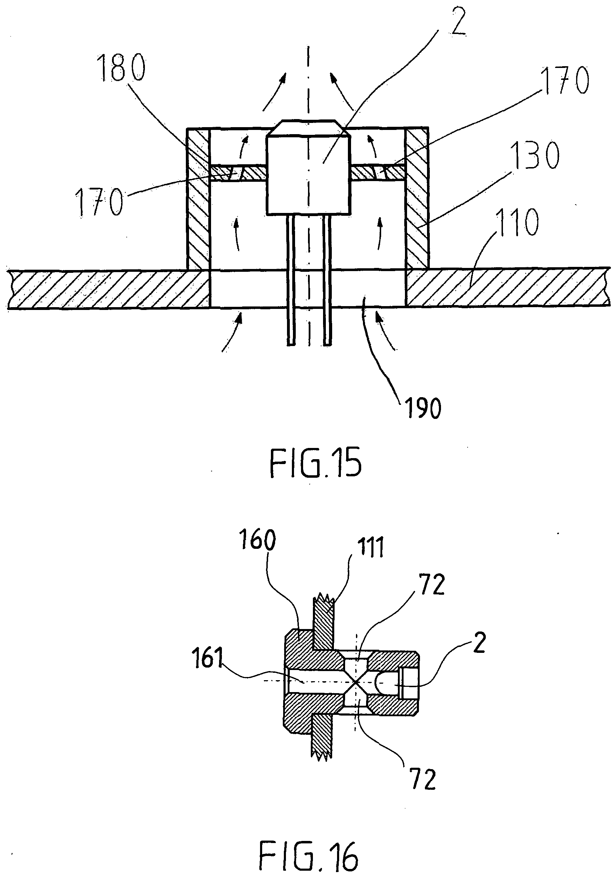

Fig.15 zeigt ein Detail eines weiteren Ausführungsbeispiels, bei dem eine Wandöffnung 190 in einer Gehäusewand 110 vorgesehen ist, die mit einem nach außen vorstehenden Rohrstück 130 in Verbindung steht.

Im Inneren des Rohrstücks 130 ist die Mess-Strahlungsquelle 2 angeordnet, die von einer Haltescheibe 180 mit Löchern 170 gehalten ist. Die Wandöffnung 190 steht mit der Vorrichtung zur Druckbeaufschlagung z.B. über einen nicht dargestellten Gehäuse-Hohlraum in Verbindung, sodass Luft oder Gas durch die Wandöffnung 190, das Rohrstück 130 und die Löcher 170 hindurch nach außen strömt (durch Pfeile angedeutet) und dabei die Mess-Strahlungsquelle 2 umspült. Analog kann diese Anordnung für die Referenz-Strahlungsquelle und das Detektorelement verwendet werden.

Ein weiteres Ausführungsbeispiel der Erfindung ist in Fig.16 im Detail gezeigt, bei dem die Mess-Strahlungsquelle 2 in einem röhrenförmigen Durchlass 160 in einem Abstand zu einer nach außen führenden Öffnung 161 des Durchlasses 160 angeordnet ist. Der röhrenförmige Durchlass 160 steht über seitliche Einlässe 72 mit der Vorrichtung zur Druckbeaufschlagung mit Luft- oder Gas in Verbindung, sodass Luft oder Gas im Bereich des Strahlenganges der Mess-Strahlungsquelle 2 strömt. Anstelle der Mess-Strahlungsquelle 2 kann die Referenz-Strahlungsquelle oder das Detektorelement angeordnet sein.

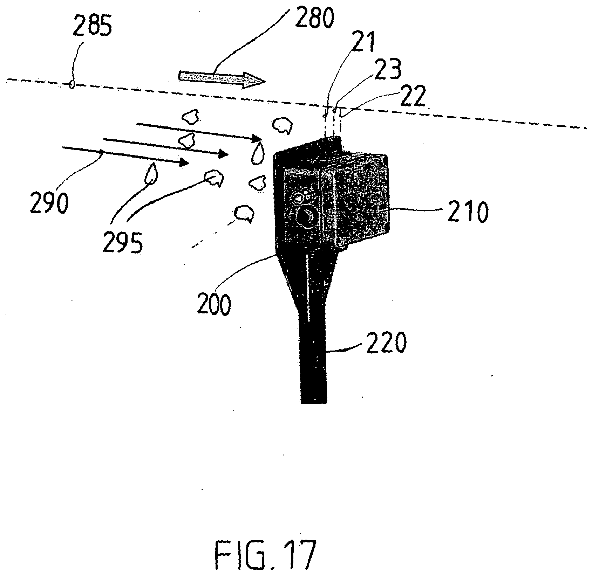

Fig.17 zeigt eine Anordnung einer in einem Gehäuse 210 untergebrachten erfindungsgemäßen Vorrichtung im Bereich einer Papierherstellungsanlage, für welche die in Herstellung befindliche Papierbahn durch die strichlierte Linie 285 angedeutet ist und sich in Richtung des Pfeils 280 bewegt. Zum Schutz gegen die direkte Einwirkung von bei der Produktion auftretenden Schwebeteilchen 295, wie Tröpfchen oder kleine Papierpartikel, die sich in Richtung der Pfeile 290 bewegen, ist eine die eine Gehäuseseite überdeckende Prallplatte 200 vorgesehen, die über ein Gestänge 220 quer zur Ausbreitungsrichtung der Schwebeteilchen 295 in Position gehalten ist.

Die Ebene der Prallplatte 200 verläuft im wesentlichen parallel zum Strahlengang der Strahlen 21, 22, 23, die aus der Mess- und Referenzstrahlungsquelle austreten und in das Detektorelement eintreten, die im Gehäuse 210 untergebracht sind. Das Gehäuse 210 ist mit einer Seite an der Prallplatte 200 angebracht.

Die erfindungsgemäße Vorrichtung kann auch für die Papierabrissdetektion bei der Papierherstellung Verwendung finden, indem die schlagartig ausbleibende Absorption der von der Mess-Strahlungsquelle ausgesandte und auf die Papierbahn auftreffende Strahlung im Detektorelement detektiert wird.

## Patentansprüche

1. Vorrichtung zur Bestimmung des Wassergehalts eines Messobjekts (1) mit zumindest einer Mess-Strahlungsquelle (2) und zumindest einer Referenz-Strahlungsquelle (4), die auf eine Messobjektoberfläche (10) gerichtet sind, sowie zumindest einem Detektorelement (3) zur Messung der Intensität der von der Messobjektoberfläche zurückreflektierten Strahlung, wobei bei Verwendung die zumindest eine Mess-Strahlungsquelle (2), die zumindest eine Referenz-Strahlungsquelle (4) und das zumindest eine Detektorelement (3) unmittelbar der Messobjektoberfläche (10) gegenüberliegend angeordnet sind, wobei die Mess-Strahlungsquelle (2), die Referenz-Strahlungsquelle (4) und das Detektorelement (3) in einem Gehäuse (15) angeordnet sind, für welche in einer Wand (18) des Gehäuses (15) entsprechende Durchbrechungen oder Durchlässe ausgebildet sind, durch welche die von der Mess-Strahlungsquelle (2) und der Referenz-Strahlungsquelle (4) ausgesandten Strahlen (21, 22) austreten und der von der Messobjektoberfläche (10) reflektierte Strahl (23) eintritt, **dadurch gekennzeichnet,**
**dass** eine Vorrichtung zur Druckbeaufschlagung mit Luft- oder Gas vorgesehen ist, mit der im Bereich des Strahlenganges jeweils zwischen der zumindest einen Mess-Strahlungsquelle (2) und der Messobjektoberfläche (10), zwischen der zumindest einen Referenz-Strahlungsquelle (4) und der Messobjektoberfläche (10) sowie zwischen der Messobjektoberfläche (10) und dem zumindest einen Detektorelement (3) eine zwangsbewegte Luft- oder Gasatmosphäre erzeugbar ist,
**dass** die Durchlässe in der Wand (18) des Gehäuses (15) durch Durchgangsbohrungen (41, 42, 43) in einem Halterungselement (31, 31') ausgebildet sind, an deren innerhalb des Gehäuses (15) gelegenen Enden die Mess-Strahlungsquelle (2), die Referenz-Strahlungsquelle (4) und das Detektorelement (3) angeordnet sind, und dessen entgegengesetzte Enden bei Verwendung auf die Messobjektoberfläche (10) gerichtet sind,
und **dass** die Durchgangsbohrungen (41, 42, 43) des Halterungselements (31, 31') jeweils zumindest einen mit der Vorrichtung zur Druckbeaufschlagung verbundenen, seitlichen Einlass (71, 72, 73) aufweisen, durch den zwangsbewegte Luft oder Gas in die Durchgangsbohrungen (41, 42, 43) einbringbar ist.

2. Vorrichtung nach Anspruch 1, **dadurch gekennzeichnet, dass** die zumindest eine Mess-Strahlungsquelle (2) und die zumindest eine Referenz-Strahlungsquelle (4) jeweils durch eine Lumineszenzdiode gebildet sind.

3. Vorrichtung nach Anspruch 1, **dadurch gekennzeichnet, dass** die zumindest eine Mess-Strahlungsquelle (2) und die zumindest eine Referenz-Strahlungsquelle (4) in einem gemeinsamen LED-Gehäuse integriert sind.

4. Vorrichtung nach Anspruch 1, 2 oder 3, **dadurch gekennzeichnet, dass** die von der zumindest einen Mess-Strahlungsquelle (2) und der zumindest einen Referenz-Strahlungsquelle (4) ausgesandten Strahlen unkollimiert sind.

5. Vorrichtung nach einem der Ansprüche 1 bis 4, **dadurch gekennzeichnet, dass** das Messobjekt (1) ein sich bewegendes Bahngut ist, das gegenüber der Mess-Strahlungsquelle (2), der Referenz-Strahlungsquelle (4) und dem Detektorelement (3) in einem konstanten Abstand geführt ist.

6. Vorrichtung nach einem der Ansprüche 1 bis 5, **dadurch gekennzeichnet, dass** nur zwei Durchbrechungen oder Durchlässe ausgebildet sind, und dass die zumindest eine Mess-Strahlungsquelle (2) und die zumindest eine Referenz-Strahlungsquelle (4) in einem gemeinsamen LED-Gehäuse integriert sind, für welches nur eine der Durchbrechungen oder Durchlässe vorgesehen ist.

7. Vorrichtung nach einem der Ansprüche 1 bis 6, **dadurch gekennzeichnet, dass** das Halterungselement (31, 31') in der Wand (18) eingelassen ist.

8. Vorrichtung nach einem der Ansprüche 1 bis 7, **dadurch gekennzeichnet, dass** die Mittelachsen der Durchgangsbohrungen (41, 42, 43) in einer Ebene fluchtend angeordnet sind.

9. Vorrichtung nach Anspruch 8, **dadurch gekennzeichnet, dass** die Mittelachsen der Durchgangsbohrungen (41, 42, 43) parallel ausgerichtet sind.

10. Vorrichtung nach Anspruch 8 oder 9, **dadurch gekennzeichnet, dass** die Mittelachse der Durchgangsbohrung (42) für das Detektorelement (3) normal zur Messobjektoberfläche (10) orientiert ist, und dass die Mittelachsen der Durchgangsbohrungen (41, 43) für die Mess-Strahlungsquelle (2) und die Referenz-Strahlungsquelle (3) jeweils einen Winkel α mit der Mittelachse der Durchgangsbohrung (42) für das Detektorelement (3) einschließen.

11. Vorrichtung nach einem der Ansprüche 1 bis 10, **dadurch gekennzeichnet, dass** die seitlichen Einlässe (71, 72, 73) durch, vorzugsweise im rechten Winkel zur Mittelachse der Durchgangsbohrungen (41, 42, 43) verlaufende, Sackbohrungen gebildet sind.

12. Vorrichtung nach einem der Ansprüche 1 bis 11, **dadurch gekennzeichnet, dass** die zumindest eine Mess-Strahlungsquelle (2) und die zumindest eine Referenz-Strahlungsquelle (4) auf einem gedachten Kreis um das zumindest eine Detektorelement (3) angeordnet sind.

13. Vorrichtung nach einem der Ansprüche 1 bis 12, **dadurch gekennzeichnet, dass** das Gehäuse (15) gasdicht ausgebildet ist, und einen druckdichten Einlass (91) zum Anschluss an die Vorrichtung zur Druckbeaufschlagung mit Luft oder Gas aufweist.

14. Vorrichtung nach einem der Ansprüche 1 bis 13, **dadurch gekennzeichnet, dass** an der Außenseite des Gehäuses (15) im Bereich der Durchbrechungen oder Durchlässe eine diese überdeckende Abdeckschale (80) vorgesehen ist, die druckdicht mit der Außenseite des Gehäuses (15) verbunden ist, die zusammen mit der Gehäuse-Außenwand einen Hohlraum ausbildet und die Öffnungen (81, 82, 83) aufweist, die fluchtend mit den Durchbrechungen oder Durchlässen verlaufen, wobei die Abdeckschale einen druckdichten Einlass (91') zum Anschluss an die Vorrichtung zur Druckbeaufschlagung mit Luft oder Gas aufweist.

15. Vorrichtung nach Anspruch 1, **dadurch gekennzeichnet, dass** im Strahlengang der zumindest einen Mess-Strahlungsquelle (2) und/oder der zumindest einen Referenz-Strahlungsquelle (4) und/oder des zumindest einen Detektorelements (3) jeweils eine strahlungsdurchlässige Schutzplatte (85, 86, 87) angeordnet ist.

16. Vorrichtung nach Anspruch 15, **dadurch gekennzeichnet, dass** die strahlungsdurchlässige Schutzplatte eine Filterplatte ist, die nur in einem festgelegten Spektralbereich strahlungsdurchlässig ist.

17. Vorrichtung nach Anspruch 15 oder 16, **dadurch gekennzeichnet, dass** ein oder mehrere mit der Vorrichtung zur Druckbeaufschlagung verbundene Gas- oder Lufteinlässe (78) vorgesehen sind, die jeweils an der der zumindest einen Mess-Strahlungsquelle (2), der zumindest einen Referenz-Strahlungsquelle (4) und des Detektorelements (3) gegenüberliegenden Seite der Schutzplatte (85, 86, 87) angeordnet sind.

18. Vorrichtung nach Anspruch 1, **dadurch gekennzeichnet, dass** zumindest eine Wandöffnung (190) in einer Gehäusewand (110) vorgesehen ist, die mit einem nach außen vorstehenden Rohrstück (130) in Verbindung steht, in welchem die zumindest eine Mess-Strahlungsquelle (2) und/oder die zumindest eine Referenzstrahlungsquelle (4) und/oder das zumindest eine Detektorelement (3) angeordnet ist oder sind, und dass die zumindest eine Wandöffnung (190) mit der Vorrichtung zur Druckbeaufschlagung mit Luft- oder Gas in Verbindung steht, sodass Luft oder Gas durch die zumindest eine Wandöffnung (190) und das Rohrstück (130) hindurch nach außen strömt und dabei die zumindest eine Mess-Strahlungsquelle (2) und/oder die zumindest eine Referenzstrahlungsquelle (4) und/oder das zumindest eine Detektorelement (3) umspült.

19. Vorrichtung nach Anspruch 1, **dadurch gekennzeichnet, dass** die zumindest eine Mess-Strahlungsquelle (2) und/oder die zumindest eine Referenzstrahlungsquelle (4) und/oder das zumindest eine Detektorelement (3) in einem röhrenförmigen Durchlass (160) in einem Abstand zu einer nach außen führenden Öffnung (161) des Durchlasses (160) angeordnet sind, und dass der röhrenförmige Durchlass (160) mit der Vorrichtung zur Druckbeaufschlagung mit Luft- oder Gas in Verbindung steht, sodass Luft oder Gas im Bereich des Strahlenganges der zumindest einen Mess-Strahlungsquelle (2) und/oder der zumindest einen Referenzstrahlungsquelle und/oder des zumindest einen Detektorelements strömt.

20. Vorrichtung nach einem der vorhergehenden Ansprüche, **dadurch gekennzeichnet, dass** eine Prallplatte (200) vorgesehen ist.

21. Vorrichtung nach Anspruch 20, **dadurch gekennzeichnet, dass** die Ebene der Prallplatte (200) im wesentlichen parallel zum Strahlengang der zumindest einen Mess-Strahlungsquelle (2) und/oder der zumindest einen Referenzstrahlungsquelle und/oder des zumindest einen Detektorelements verläuft.

22. Vorrichtung nach Anspruch 20 oder 21, **dadurch gekennzeichnet, dass** die zumindest eine Mess-Strahlungsquelle und die zumindest eine Referenzstrahlungsquelle und das zumindest eine Detektorelement in einem Gehäuse (210) angeordnet sind, das mit einer Seite an der Prallplatte (200) angebracht ist.

23. Verwendung einer Vorrichtung nach einem der vorhergehenden Ansprüche 1 bis 22 zur Papierabrissdetektion bei der Papierherstellung.

## Claims

1. A device for determining the water content of a measurement object (1) using at least one measuring radiation source (2) and at least one reference radiation source (4) directed towards a measurement object surface (10) and at least one detector element (3) for measuring the intensity of the radiation reflected by the measurement object surface, said at least one measurement radiation source (2), said at least one reference radiation source (4) and said at least one detector element (3) being arranged directly opposite said measurement object surface (10) when in use, said measurement radiation source (2), said reference radiation source (4) and said detector element (3) being arranged in a housing (15), corresponding through holes or passages being formed in a wall (18) of said housing (15), through which the beams (21, 22) emitted by the measurement radiation source (2) and the reference radiation source (4) emerge and through which the beam (23) reflected by the measurement object surface (4) enters, **characterised in**
**that** a device for air or gas pressurisation with which a forcibly stirred air or gas atmosphere can be generated in the area of the beam path between said at least one measurement radiation source (2) and said measurement object surface (10), between said at least one reference radiation source (4) and said measurement object surface (10) and between said measurement object surface (10) and said at least one detector element (3) is provided,
**that** the passages in the wall (18) of the housing (15) are formed by through bores (41, 42, 43) in a mounting element (31, 31'), said measurement radiation source (2), said reference radiation source (4) and said detector element (3) being arranged at that end of said through bores (41, 42, 43) which is located within the housing (15), the opposite ends of said through bores being directed towards said measurement object surface (10), when in use,
and **that** said through bores (41, 42, 43) of said mounting element (31, 31') each have at least one lateral inlet (71, 72, 73) connected to said pressurisation device, through which forcibly stirred air or gas can be introduced into the through bores (41, 42, 43).

2. The device according to claim 1, **characterised in that** said at least one measurement radiation source (2) and said at least one reference radiation source (4) are each formed by a luminescence diode.

3. The device according to claim 1, **characterised in that** said at least one measurement radiation source (2) and said at least one reference radiation source (4) are integrated into a common LED housing.

4. The device according to any one of the claims 1, 2 or 3, **characterised in that** the beams emitted by said at least one measurement radiation source (2) and said at least one reference radiation source (4) are uncollimated.

5. The device according to any one of the claims 1 to 4, **characterised in that** said measurement object (1) is a moving web material which is moved at a constant distance opposite said measurement radiation source (2), said reference radiation source (4) and said detector element (3).

6. The device according to any one of the claims 1 to 5, **characterised in that** only two through holes or passages are formed and that said at least one measurement radiation source (2) and said at least one reference radiation source (4) are integrated into a common LED housing for which only one through hole or passage is provided.

7. The device according to any one of the claims 1 to 6, **characterised in that** said mounting element (31, 31') is embedded into the wall (18).

8. The device according to any one of the claims 1 to 7, **characterised in that** the central axes of the through bores (41, 42, 43) are aligned with one another in the same plane.

9. The device according to claim 8, **characterised in that** the central axes of the through bores (41, 42, 43) are arranged in parallel to one another.

10. The device according to claim 8 or claim 9, **characterised in that** the central axis of the through bore (42) for the detector element (3) is oriented perpendicularly to the measurement object surface (10) and that each of the central axes of the through bores (41, 43) for the measurement radiation source (2) and the reference radiation source (3) forms an angle α with the central axis of said through bore (42) for the detector element.

11. The device according to any one of the claims 1 to 10, **characterised in that** said lateral inlets (71, 72, 73) are formed by blind holes which preferably are perpendicular to the central axis of the through bores (41, 42, 43).

12. The device according to any one of the claims 1 to 11, **characterised in that** said at least one measurement radiation source (2) and said at least one reference radiation source (4) are arranged on an imaginary circle drawn around said at least one detector element (3).

13. The device according to any one of the claims 1 to 12, **characterised in that** the housing (15) is gas-tight and has a pressure-tight inlet (91) for being connected to the air or gas pressurisation device.

14. The device according to any one of the claims 1 to 13, **characterised in that** on the outer surface of said housing (15) in the area of the through holes or passages a covering shell (80) which is connected in a pressure-tight way to the outer surface of the housing (15), forms a cavity with said outer surface of the housing (15) and has openings (81, 82, 83) which are aligned with the through holes or passages is provided to cover said trough holes or passages, said covering shell having a pressure-tight inlet (91') for being connected to the air or gas pressurisation device.

15. The device according to claim 1, **characterised in that** a radiopaque protection plate (85, 86, 87) is arranged in each of the beam paths of said at least one measurement radiation source (2) and/or said at least one reference radiation source (4) and/or said at least one detector element (3).

16. The device according to claim 15, **characterised in that** said radiopaque protection plate is a filter plate which is radiolucent only in a determined spectral range.

17. The device according to claim 15 or claim 16, **characterised in that** one or several gas or air inlets (78) connected to the pressurisation device are provided, each of them being arranged on the side of said protection plate (85, 86, 87) which is opposite to said at least one measurement radiation source (2), said at least one reference radiation source (4) and said detector element (3).

18. The device according to claim 1, **characterised in that** at least one wall opening (190) which is connected to a projecting pipe section (130) in which said at least one measurement radiation source (2) and/or said at least one reference radiation source (4) and/or said at least one detector element (3) is/are arranged is provided in a housing wall (110) and that said at least one wall opening (190) is connected to said air or gas pressurisation device, so that air or gas flows out through said at least one wall opening (190) and said pipe section (130) and flushes around said at least one measurement radiation source (2) and/or said at least one reference radiation source (4) and/or said at least one detector element (3).

19. The device according to claim 1, **characterised in that** said at least one measurement radiation source (2) and/or said at least one reference radiation source (4) and/or said at least one detector element (3) are arranged in a tubular passage (160) spaced apart from an opening (161) of said passage (160) which leads outside and that said tubular passage (160) is connected to said air or gas pressurisation device, so that air or gas flows in the area of the beam paths of said at least one measurement radiation source (2) and/or said at least one reference radiation source (4) and/or said at least one detector element (3).

20. The device according to any one of the preceding claims, **characterised in that** a deflector plate (200) is provided.

21. The device according to claim 20, **characterised in that** the plane of said deflector plate (200) is essentially parallel to the beam paths of said at least one measurement radiation source (2) and/or said at least one reference radiation source (4) and/or said at least one detector element (3).

22. The device according to claim 20 or 21, **characterised in that** said at least one measurement radiation source and said at least one reference radiation source and said at least one detector element are arranged within a housing (210), one side of which is mounted to said deflector plate (200).

23. The use of a device according to any one of the preceding claims 1 to 22 for detecting paper breaks during paper production.

## Revendications

1. Dispositif pour déterminer la teneur en eau d'un sujet mesuré (1) moyennant au moins une source rayonnante de mesure (2) et au moins une source rayonnante de référence (4), qui sont orientées vers une surface (10) du sujet mesuré, ainsi qu'au moins un élément détecteur (3) pour mesurer l'intensité du rayonnement reflété par la surface du sujet mesuré, ladite au moins une source rayonnante de mesure (2), ladite au moins une source rayonnante de référence (4) et ledit au moins un élément détecteur (3) étant disposés directement en face de la surface (10) du sujet mesuré pendant l'utilisation, ladite source rayonnante de mesure (2), ladite source rayonnante de référence (4) et ledit élément détecteur (3) étant disposés dans un boîtier (15), pour lequel sont formés, dans une paroi (18) du boîtier (15), des découpes ou passages respectifs, par lesquels les rayons (21, 22) émis par la source rayonnante de mesure (2) et la source rayonnante de référence (4) sortent et par lesquels le rayon (23) émis par la surface (10) du sujet de mesure entre, **caractérisé en ce que**
un dispositif pour appliquer de la pression avec de l'air ou du gaz est prévu, par lequel une atmosphère d'air ou de gaz agitée de force peut être générée dans la zone du trajet de rayon entre ladite au moins une source rayonnante (2) de mesure et ladite surface (10) du sujet de mesure, entre ladite au moins une source rayonnante (4) de référence et ladite surface (10) du sujet de mesure ainsi qu'entre ladite surface (10) du sujet de mesure et ledit au moins un élément détecteur (3),
lesdits passages dans la paroi (18) du boîtier (15) sont formés par des perçages (41, 42, 43) de passage dans un élément (31, 31') de montage, sur les extrémités desquels se trouvant à l'intérieur du boîtier (15) sont disposés ladite source rayonnante (2) de mesure, ladite source rayonnante (4) de référence et ledit élément détecteur (3), et dont les extrémités opposées sont orientées vers la surface (10) du sujet de mesure pendant l'utilisation,
et lesdits perçages (41, 42, 43) de passage dudit l'élément (31, 31') de montage comprennent chacun au moins une entrée (71, 72, 74) latérale reliée avec ledit dispositif de pressurisation, par laquelle de l'air ou du gaz agité de force peut être introduit dans lesdits perçages (41, 42, 43) de passage.

2. Dispositif selon la revendication 1, **caractérisé en ce que** ladite au moins une source rayonnante (2) de mesure et ladite au moins une source rayonnante (4) de référence sont chacune formées par une diode luminescente.

3. Dispositif selon la revendication 1, **caractérisé en ce que** ladite au moins une source rayonnante (2) de mesure et ladite au moins une source rayonnante (4) de référence sont intégrées dans un boîtier à LED commun.

4. Dispositif selon l'l'une quelconque des revendications 1, 2 ou 3, **caractérisé en ce que** les rayons émis par ladite au moins une source rayonnante (2) de mesure et ladite au moins une source rayonnante (4) de référence sont non-collimatés.

5. Dispositif selon l'l'une quelconque des revendications 1 à 4, **caractérisé en ce que** l'objet de mesure (1) est un matériel de bande en mouvement, qui est guidé avec un écart constant en face de ladite source rayonnante (2) de mesure, ladite source rayonnante (4) de référence et dudit élément détecteur (3).

6. Dispositif selon l'l'une quelconque des revendications 1 à 5, **caractérisé en ce qu'**uniquement deux découpes ou passages sont formés et **en ce que** ladite au moins une source rayonnante (2) de mesure et ladite au moins une source rayonnante (4) de référence sont intégrées dans un boîtier à LED commun, pour lequel est prévu uniquement un(e) desdit(e)s découpes ou passages.

7. Dispositif selon l'l'une quelconque des revendications 1 à 6, **caractérisé en ce que** l'élément (31, 31') de montage est encastré dans la paroi (18).

8. Dispositif selon l'l'une quelconque des revendications 1 à 7, **caractérisé en ce que** les axes centraux desdits perçages (41, 42, 43) de passage sont alignés dans le même plan.

9. Dispositif selon l'l'une quelconque des revendications 1 à 8, **caractérisé en ce que** les axes centraux des desdits perçages (41, 42, 43) de passage sont parallèles.

10. Dispositif selon l'l'une quelconque des revendications 8 ou 9, **caractérisé en ce que** l'axe central dudit perçage (42) de passage pour ledit élément détecteur (3) est perpendiculaire à ladite surface (10) du sujet mesuré et **en ce que** les axes centraux desdits perçages (41, 43) de passage pour ladite source rayonnante (2) de mesure et ladite source rayonnante (3) de référence forment chacune un angle α avec l'axe du perçage (42) de passage pour ledit élément détecteur (3).

11. Dispositif selon l'une quelconque des revendications 1 à 10, **caractérisé en ce que** les entrées (71, 72, 73) latérales sont formées par des perçages borgnes, qui sont de préférence perpendiculaires à l'axe central des perçages (41, 42, 43) de passage.

12. Dispositif selon l'une quelconque des revendications 1 à 11, **caractérisé en ce que** ladite au moins une source rayonnante (2) de mesure et ladite au moins une source rayonnante (4) de référence sont disposées sur un cercle imaginaire autour dudit au moins un élément détecteur (3).

13. Dispositif selon l'une quelconque des revendications 1 à 12, **caractérisé en ce que** ledit boîtier est formé pour être étanche aux gaz et comprend une entrée (91) **étanche** à la pression, prévue pour être connectée audit dispositif pour appliquer de **la pression** avec de l'air ou du gaz.

14. Dispositif selon l'une quelconque des revendications 1 à 13, **caractérisé en ce que** sur la face extérieure dudit boîtier (15) dans la zone desdit(e)s découpes ou passages une coque de recouvrement recouvrant celle-ci est prévue, qui est reliée de manière étanche à la pression avec la face extérieure dudit boîtier (15), qui forme une cavité avec ladite paroi extérieure du boîtier et qui présente des ouvertures (81, 82, 83), qui sont alignées avec lesdit(e)s découpes ou passages, la coque de recouvrement comportant une entrée (91') étanche à la pression prévue pour être connectée audit dispositif pour appliquer de la pression avec de l'air ou du gaz.

15. Dispositif selon l'une quelconque des revendications 1 à 14, **caractérisé en ce que** dans le trajet de rayon de chacun(e) de ladite au moins une source rayonnante (2) et/ou ladite au moins une source rayonnante (4) de référence et/ou dudit au moins un élément détecteur (3) est disposé une plaque (85, 86, 86) de protection perméable aux rayonnements.

16. Dispositif selon la revendication 15, **caractérisé en ce que** ladite plaque de protection perméable aux rayonnements est une plaque de filtre, qui est perméable aux rayonnements uniquement dans une région spectrale déterminée.

17. Dispositif selon l'une quelconque des revendications 15 ou 16, **caractérisé en ce qu'**une ou plusieurs entrées (78) de gaz ou d'air reliées avec ledit dispositif pour appliquer de la pression avec de l'air ou du gaz sont prévues, qui sont disposées sur le côté de ladite plaque (85, 86, 86) de protection qui se trouve en face de ladite au moins une source rayonnante (2), ladite au moins une source rayonnante (4) de référence et dudit au moins un élément détecteur (3).

18. Dispositif selon la revendication 1, **caractérisé en ce que** dans une paroi (11) du boîtier au moins une ouverture (190) de paroi est prévue, qui est reliée avec une partie (130) de tuyau saillissant vers l'extérieur, dans lequel est/sont disposé(e)/s ladite au moins une source rayonnante (2) et/ou ladite au moins une source rayonnante (4) de référence et/ou dudit au moins un élément détecteur (3), et **en ce que** ladite au moins une ouverture (190) de paroi est reliée avec le dispositif pour appliquer de la pression avec de l'air ou du gaz, de sorte que l'air ou le gaz sorte à travers ladite au moins une ouverture (190) de paroi et ladite partie (130) de tuyau et, ce faisant, rince ladite au moins une source rayonnante (2) et/ou ladite au moins une source rayonnante (4) de référence et/ou ledit au moins un élément détecteur (3).

19. Dispositif selon la revendication 1, **caractérisé en ce que** ladite au moins une source rayonnante (2) et/ou ladite au moins une source rayonnante (4) de référence et/ou dudit au moins un élément détecteur (3) sont disposés dans un passage (160) tubulaire avec un écart par rapport à une ouverture (161) dudit passage (160) menant vers l'extérieur, et **en ce que** ledit passage (160) tubulaire est relié avec ledit dispositif pour appliquer de la pression avec de l'air ou du gaz, de sorte que de l'air ou du gaz circule dans la zone du trajet de rayon de ladite au moins une source rayonnante (2) et/ou ladite au moins une source rayonnante de référence et/ou dudit au moins un élément détecteur.

20. Dispositif selon l'une quelconque des revendications précédentes, **caractérisé en ce qu'**une plaque (200) déflectrice est prévue.

21. Dispositif selon l'une quelconque des revendications précédentes, **caractérisé en ce que** le plan de ladite plaque (200) déflectrice est essentiellement parallèle au trajet de rayon de ladite au moins une source rayonnante (2) et/ou ladite au moins une source rayonnante de référence et/ou dudit au moins un élément détecteur.

22. Dispositif selon l'une quelconque des revendications 20 ou 21, **caractérisé en ce que** ladite au moins une source rayonnante (2) et/ou ladite au moins une source rayonnante de référence et/ou ledit au moins un élément détecteur sont disposés dans un boîtier (210), dont un côté est monté sur ladite plaque (200) déflectrice.

23. Utilisation d'un dispositif selon l'une quelconque des revendications 1 à 20 pour détecter des déchirures de papier dans la production de papier.
